Europäisches Patentamt

European Patent Office

Office européen des brevets

(11) Numéro de publication : **0 508 861 A1**

# (12) DEMANDE DE BREVET EUROPEEN

(21) Numéro de dépôt : **92400907.9**

(22) Date de dépôt : **01.04.92**

(51) Int. Cl.⁵ : **H02G 3/06**

(30) Priorité : **12.04.91 FR 9104498**

(43) Date de publication de la demande :
**14.10.92 Bulletin 92/42**

(84) Etats contractants désignés :
**DE ES GB**

(71) Demandeur : **CAPRI-CODEC S.A.:Société anonyme dite**
**24 à 32 rue Ernest Renan**
**F-92707 Colombes Cédex (FR)**

(72) Inventeur : **De Vienne, Robert**
**8 bis, rue Laurent Pichat**
**F-75116 Paris (FR)**

(74) Mandataire : **Bertrand, Didier et al**
**c/o S.A. FEDIT-LORIOT & AUTRES CONSEILS**
**EN PROPRIETE INDUSTRIELLE 38, Avenue Hoche**
**F-75008 Paris (FR)**

(54) **Entrée de câble à module d'ancrage.**

(57)   Le presse-étoupe (1) comprend un corps tubulaire (3) renfermant une garniture compressible (6) pressée par un chapeau vissable (9) terminé extérieurement par une collerette (14).

Un module d'ancrage comporte deux étriers (16) possédant un évidement intérieur (24) coopérant avec ladite collerette (14) de sorte que les étriers peuvent être placés latéralement et chevaucher la collerette (14) et être ainsi bloqués axialement, les étriers coopérant avec des moyens de serrage (16) pour être solidarisés sur la collerette (14) lors du serrage desdits moyens.

FIG.1

EP 0 508 861 A1

L'invention concerne les presse-étoupes pour le maintien d'un élément cylindrique allongé traversant une paroi. Il s'agit notamment d'entrées de câbles, de tubes, de gaines ou analogues.

Le document EP-A-206 896 de la Demanderesse fait déjà connaître un presse-étoupe comprenant un corps tubulaire renfermant une garniture compressible pressée par un chapeau vissable terminé extérieurement par une collerette coopérant avec un module d'ancrage de l'élément allongé, le module comportant des moyens de serrage susceptibles de venir latéralement entourer l'élément allongé et d'être serrés sur celui-ci.

Selon ce document, le module d'ancrage est formé d'une bague complète venant s'encliqueter sur la collerette du chapeau du presse-étoupe. Comme le chapeau est usuellement métallique (laiton) et donc sensiblement indéformable, l'encliquetage n'est possible que si la bague du module d'ancrage est en matière déformable, par exemple en matière plastique. La résistance de cette bague à l'arrachement n'est alors pas très grande. D'autre part et surtout, la bague ne peut être montée sur le chapeau qu'avant l'installation du câble et non postérieurement.

L'invention a pour but d'améliorer le dispositif précité de façon à permettre le montage du module d'ancrage après l'installation de l'élément allongé maintenu dans le presse-étoupe.

A cet effet, dans le presse-étoupe conforme à l'invention, le module d'ancrage comporte au moins un étrier possédant un évidement intérieur coopérant avec ladite collerette de sorte que l'étrier peut être placé latéralement et chevaucher la collerette au moins partiellement grâce à son évidement et être ainsi bloqué axialement, l'étrier coopérant avec les moyens de serrage pour être solidarisé avec la collerette lors du serrage desdits moyens.

Ainsi, selon l'invention, il est possible, même après installation du câble dans le presse-étoupe, de fixer un module d'ancrage s'accrochant à la collerette au moyen dudit évidement et maintenu en position grâce au serrage des moyens de serrage, généralement sous forme d'éléments de type demi-colliers ou demi-brides assemblables entre eux et à l'étrier au moyen de vis de serrage.

Dans la plupart des cas, il est important d'assurer en plus d'une grande résistance à l'arrachement, une résistance à la torsion du câble. A cet effet, on prévoit sur l'étrier un moyen de blocage en rotation par rapport au chapeau.

Généralement, le chapeau comporte des facettes latérales (par exemple, les six pans de serrage); alors l'étrier comporte au moins une partie d'appui destinée à coopérer avec une facette pour bloquer l'étrier en rotation.

Selon un mode de réalisation assez simple, l'étrier est unique et les moyens de serrage consistent en deux demi-colliers susceptibles d'être solidarisés à l'étrier par vissage.

Selon une version préférée, il est prévu deux étriers qui servent alors simultanément de moyens de serrage de l'élément allongé.

L'évidement peut être un secteur plus ou moins étendu de gorge circulaire, sensiblement complémentaire de la collerette.

Mais de préférence, l'évidement consiste en deux rainures parallèles diamétralement opposées venant simplement tangenter la collerette.

Chaque étrier est sensiblement en forme de U dont le corps est arqué latéralement pour offrir un volume disponible pour le câble. Les branches du U forment les pattes d'appui sur les pans de serrage du chapeau. De préférence, elles sont d'inégale largeur.

D'autres caractéristiques et avantages de l'invention apparaîtront à la lecture de la description suivante. On se référera aux dessins annexés sur lesquels :

- la figure 1 est une vue en perspective partiellement éclatée d'un premier mode de réalisation de l'invention,
- la figure 2 rassemble une demi-vue de face et une demi-coupe du dispositif de la figure 1 serré sur un câble de diamètre minimal,
- la figure 3 est analogue à la figure 2 pour un câble de diamètre maximal,
- la figure 4 est une vue analogue à la figure 1 d'un second mode de réalisation,
- la figure 5 est une vue analogue à la figure 3 du second mode de réalisation,
- la figure 6 est une vue en perspective d'un troisième mode de réalisation de module d'ancrage.

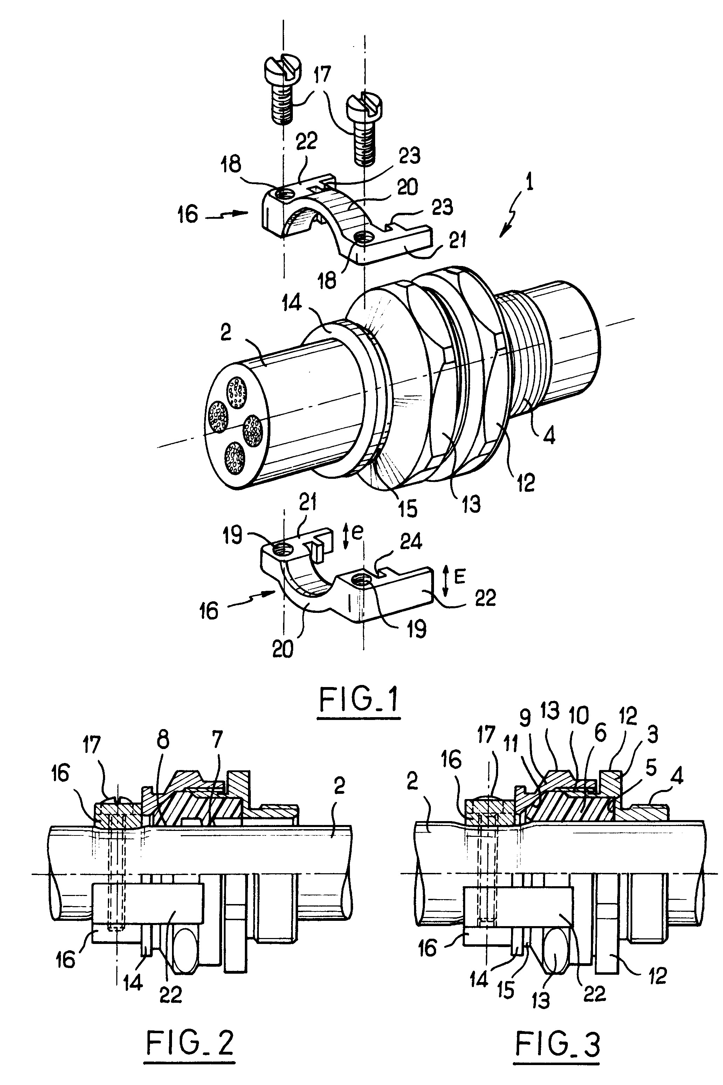

Les figures 1 à 3 montrent un presse-étoupe 1 pour le maintien d'un câble 2 dans l'orifice d'une paroi non représentée. De manière classique, le presse-étoupe 1 comprend un corps tubulaire 3 dont l'extrémité destinée à traverser la paroi présente un filetage 4. L'autre extrémité présente un épaulement terminal interne 5 sur lequel vient s'appuyer une garniture 6. Celle-ci est en forme générale de bague cylindrique, comportant intérieurement deux lèvres 7 et 8 susceptibles de s'écraser lorsque la bague 6 est comprimée au maximum.

La garniture 6 est comprimée entre l'épaulement 5 par un chapeau-écrou 9 vissé sur le corps 3 grâce au filetage 10. Le chapeau 9 présente une partie tronconique II coopérant avec une portée également tronconique de la garniture 6 pour le fluage de celle-ci en direction du câble 2.

Le corps 3 et le chapeau 9 comprennent une surface extérieure de préhension à six pans respectivement 12 et 13 pour une clé de serrage par vissage.

Enfin, l'extrémité du chapeau 9 comporte une collerette terminale d'accrochage 14, séparée de la surface à six pans 13 par une gorge 15.

Le module d'ancrage comporte deux étriers 16 destinés à venir de part et d'autre du presse-étoupe et du câble 2 pour être réunis et serrés au moyen de deux vis 17; à cet effet, l'un des étriers 16 comporte des trous traversants 18 lisses tandis que l'autre comporte des trous traversants taraudés 19.

Chaque étrier est sensiblement en forme de U relativement plat comportant un corps 20 et deux branches 21 et 22. Le corps 20 est arqué vers l'extérieur pour s'adapter plus ou moins à la surface cylindrique du câble 2 à enserrer. L'épaisseur e de la branche 21 est inférieure à l'épaisseur E de la branche 22 : les faces extérieures (du côté de la convexité du corps 20) des branches 21 et 22 sont dans le même plan, tandis que les faces intérieures (du côté de la concavité du corps 20) sont dans des plans parallèles distincts.

Les branches 21 et 22 forment des pattes planes allongées dimensionnées de manière à pouvoir chevaucher deux pans opposés 13 du chapeau 9 lorsque les étriers 16 sont en place. Sur la face radialement intérieure des pattes est prévue une nervure 23, de sorte qu'une rainure 24 est formée entre ladite nervure 23 et le corps 20.

La mise en place du module d'ancrage est la suivante. On suppose le presse-étoupe 1 déjà installé sur une paroi, avec son câble 2.

On amène latéralement les étriers 16 autour du câble 2 de manière que les pattes 21 et 22 s'engagent parallèlement à une paire de pans opposés 13 du chapeau et que les rainures 24 des étriers viennent tangenter la collerette 14 du chapeau. On passe alors la vis 17 dans les étriers qu'on assemble par serrage : selon le diamètre du câble 2, l'étanchéité 6 s'écrase plus ou moins sur le câble 2 (figures 2 et 3) lors du serrage. En fin de serrage, le module d'ancrage est bloqué axialement par la coopération des rainures 24 et de la collerette 14 du chapeau, tandis qu'il est bloqué en rotation par la coopération des pattes 21 et 22 et des pans de serrage 13 qu'elles couvrent partiellement avec un faible jeu.

Grâce à la dissymétrie des pattes 21 et 22, il est possible de prévoir une patte (la patte 22) suffisamment large pour s'assurer qu'elle portera à plat sur un pan 13, même si le câble 2 est très large et ne permet pas un serrage complet des étriers. Il suffit que la patte 22 de chacun des deux étriers 16 porte sur un pan 13 opposé pour assurer le blocage en rotation.

Par ailleurs, la forme rectiligne des rainures 24 fait qu'il n'y a aucun blocage radial lors du serrage des étriers 16 l'un contre l'autre.

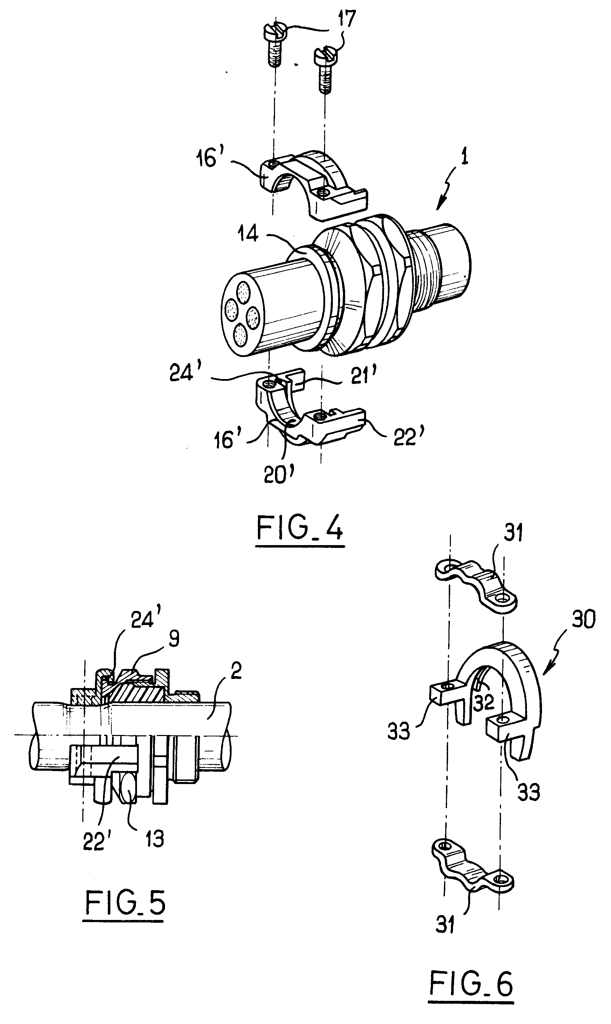

Selon le mode de réalisation des figures 4 et 5, le presse-étoupe est identique à celui qui a été décrit. Seuls les étriers 16' diffèrent en ce que :

– les pattes 21' et 22' sont symétriques,
– les courtes rainures rectilignes 24 sont remplacées par une rainure arquée, ou gorge 24' reliant les deux pattes 21' et 22' en suivant le bord du corps arqué 20'.

Ce mode de réalisation ne présente pas tous les avantages du mode précédent, et utilise plus de matière. En revanche, il assure une résistance extraordinaire à l'arrachement, dans la mesure où la collerette 14 coopère avec une rainure 24' assez longue.

La figure 6 représente un mode de réalisation plus primitif de l'invention, dans lequel la fonction d'étrier solidaire du chapeau est dissociée de celle du collier de serrage du câble. Le module d'ancrage comporte en effet un étrier unique 30 et deux demi-colliers de serrage 31. L'étrier 30 comporte une rainure ou gorge intérieure 32 lui permettant de chevaucher au moins partiellement la collerette 14 d'un chapeau de presse-étoupe. D'autre part, l'étrier 30 présente deux blocs latéraux percés 33 sur lesquels viennent se placer de part et d'autre les demi-colliers 31 grâce à des vis, non représentées. La version représentée, très simple, ne présente pas de patte de blocage en rotation, mais il va de soi qu'on peut en prévoir sur l'étrier 30.

## Revendications

1. Presse-étoupe (1) pour le maintien d'un élément cylindrique allongé (2), tel qu'un câble, traversant une paroi, comprenant un corps tubulaire (3) renfermant une garniture compressible (6) pressée par un chapeau vissable (9) terminé extérieurement par une collerette (14) coopérant avec un module d'ancrage de l'élément allongé, le module comportant des moyens de serrage susceptibles de venir latéralement entourer l'élément allongé (2) et d'être serrés sur celui-ci,
caractérisé en ce que le module comporte au moins un étrier (16,16',30) possédant un évidement intérieur (24,24',32) coopérant avec ladite collerette (14) de sorte que l'étrier peut être placé latéralement et chevaucher la collerette (14) au moins partiellement grâce à son évidement et être ainsi bloqué axialement, l'étrier coopérant avec les moyens de serrage (16,16',31) pour être solidarisé sur la collerette (14) lors du serrage desdits moyens.

2. Presse-étoupe selon la revendication 1, dans lequel le chapeau (9) comporte des facettes latérales (13), caractérisé en ce que l'étrier comporte au moins une partie d'appui (21,22,21',22') destinée à coopérer avec une facette (13) pour bloquer l'étrier (16,16') en rotation.

3. Presse-étoupe selon l'une quelconque des revendications 1 ou 2, caractérisé en ce que l'étrier (30) est unique et les moyens de serrage consistent en deux demi-colliers (31) susceptibles d'être solidarisés à l'étrier (30) par vissage.

4. Presse-étoupe selon l'une quelconque des revendications 1 ou 2, dans lequel il est prévu deux étriers (16,16') constituant les moyens de serrage de l'élément allongé (2).

5. Presse-étoupe selon l'une quelconque des revendications 1 à 4, caractérisé en ce que l'évidement (24,32) est un secteur de gorge circulaire.

6. Presse-étoupe selon l'une quelconque des revendications 1 à 4, caractérisé en ce que l'évidement consiste en deux rainures parallèles opposées (24).

7. Presse-étoupe selon la revendication 6, caractérisé en ce que chaque étrier (16,16') est sensiblement en forme de U dont le corps est arqué latéralement.

8. Presse-étoupe selon la revendication 7, caractérisé en ce que les branches (21,22) du U, formant pattes d'appui, sont d'inégale largeur.

FIG_1

FIG_2

FIG_3

FIG_4

FIG_5

FIG_6

Office européen
des brevets

**RAPPORT DE RECHERCHE EUROPEENNE**

Numero de la demande

EP    92 40 0907

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 624 664 (LEGRAND) | 1,2,4 | H02G3/06 |
| A | * le document en entier * | 3 | |
| | --- | | |
| A | DE-U-8 907 815 (ELEKTRO-APPARATE) | 1,2 | |
| | * page 2, ligne 11 - page 5, ligne 30; revendications 1,2; figures 1,2 * | | |
| | ----- | | |

**DOMAINES TECHNIQUES RECHERCHES (Int. Cl.5)**

H02G
H01R

Le présent rapport a été établi pour toutes les revendications

| Lieu de la recherche | Date d'achèvement de la recherche | Examinateur |
|---|---|---|
| LA HAYE | 22 JUILLET 1992 | RIEUTORT A.S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)